# EUROPEAN PATENT APPLICATION

(11) **EP 2 113 928 A1**
(43) Date of publication of application: **04.11.2009**
(21) Application number: 08155266.3
(22) Date of filing: 28.04.2008
(51) Int. Cl.: H01F 17/02, H01F 37/00, H02M 1/12

(54) **Inverter filter structure**

(71) Applicant: ABB Oy, 00380 Helsinki (FI)
(72) Inventor: Kinnunen, Henri, 02880, Veikkola (FI); Mikkola, Juha, 03400, Vihti (FI)
(74) Representative: Valkeiskangas, Tapio Lassi Paavali

(57) **Abstract**

An filter structure for an inverter, where the filter structure comprises at least one choke per phase (U, V, W) and each choke is an air-core choke. The air-core chokes of the structure are arranged on the same axis such that the magnetic axis of each air core choke corresponds to each other.

## Description

### FIELD OF THE INVENTION

The present invention relates to filters and especially to a filter structure to be connected to output of an inverter.

### BACKGROUND OF THE INVENTION

An inverter bridge of a frequency converter produces common-mode voltage in its normal operation. The common-mode voltage acts as a voltage source for capacitive currents closing through the stray capacitances of a frequency converter drive.

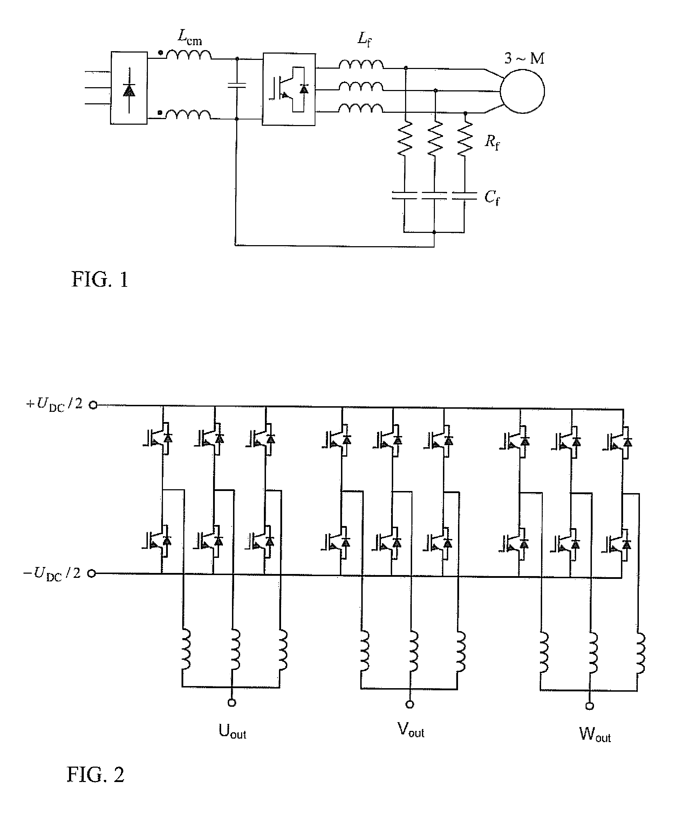

In high-powered system drives common-mode current is reduced by using both output filters and common-mode chokes *L*_{cm}, as shown in Figure 1. The output filter *L*_{f}, *R*_{f}, *C*_{f} is also used for filtering differential-mode voltages i.e. making the rise time of voltage steps longer. Output filters are also used for equalizing currents between different output modules when one phase output consists of multiple branches giving more loadability to each output module. Output filters are also helpful in monitoring parallel connected switches in connection with multiple branches. Branch-specific inductances enable an erroneously operating IGBT switch to be determined by measuring voltages over conducting IGBT switches.

Figure 2 shows the inverter stage of a frequency converter where each output phase comprises three upper and lower IGBT switches, i.e., three branches. The switches that are connected bridged between DC-voltage *U*_{DC} are controlled such that upper switches of one output phase are controlled simultaneously and lower switches of one output phase are controlled simultaneously respectively.

Each branch in each output phase comprises a choke. The first ends of the chokes are connected to a point between the upper and lower switches. The second ends of the chokes of each phase are connected together to form phase outputs Uₒᵤₜ, Vₒᵤₜ, Wₒᵤₜ. Thus in Figure 2, each phase consists of three parallel branches each having three chokes.

It is known to use rings made of nano crystal material for common-mode filtering. For example, three such rings are arranged to surround the DC-conductors of each inverter module to suppress common-mode currents. This solution is, however, quite expensive and the cooling of the rings is difficult to achieve. Further, the rings saturate easily and their performance with respect to high frequencies is poor. Common-mode filtering can also be carried out in the output of the inverter by, for example, surrounding the output phases with the above-mentioned rings.

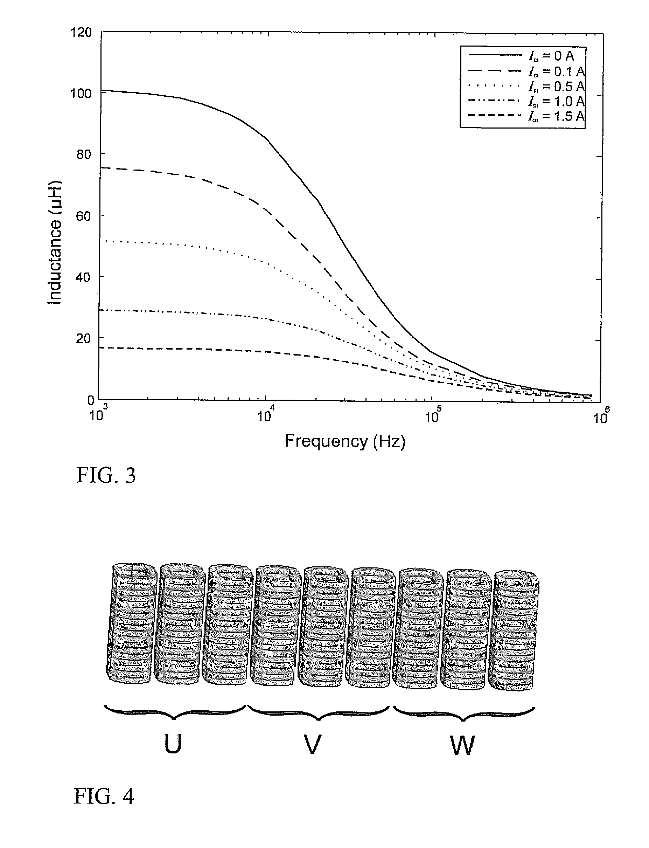

Figure 3 shows an example of inductances of nano crystal rings as a function of frequency and current. Current pulses with a magnitude of tens of amperes can be present in the intermediate circuit of a frequency converter. The frequencies of these current pulses vary typically from 10kHz to 1 MHz. As can be seen from Figure 3, the nano crystal rings are not at their best with high frequencies or currents, although the inductance of the ring is quite high at low frequencies and currents. This behaviour can, of course, be improved by using a material with lower permeability and by using a larger cross-sectional area in the rings.

Differential filtering is typically carried out with an iron-core or an air-core choke, which is used for limiting the rise rate of the output voltage. A known output choke structure is shown in Figure 4, which corresponds to the circuit of Figure 2. Figure 4 shows nine separate coils which means three coils for each output phase U, V, W as in Figure 2. In the configuration shown in Figure 4, the common-mode current does not form a common magnetic flux for each choke due to the physical arrangement and structure of the chokes. This means that common-mode inductance is quite small. In practice common-mode inductance is formed from a parallel connection of the phase inductances and is thus in the example of Figure 4 one ninth of the differential-mode inductance of one choke. Figure 4 shows three parallel power stages. However, the number of parallel stages is not limited and can be from 2 up to any desirable number.

A problem relating to known filter structures relates to the operation especially at high frequencies and to the costs of the structure. Further, separate chokes are needed for common-mode and differential-mode currents.

### BRIEF DESCRIPTION OF THE INVENTION

An object of the present invention is to provide a filter structure which avoids the above-mentioned drawbacks. The object of the invention is achieved by a filter structure that is characterized by what is stated in the independent claim. Preferred embodiments of the invention are disclosed in the dependent claims.

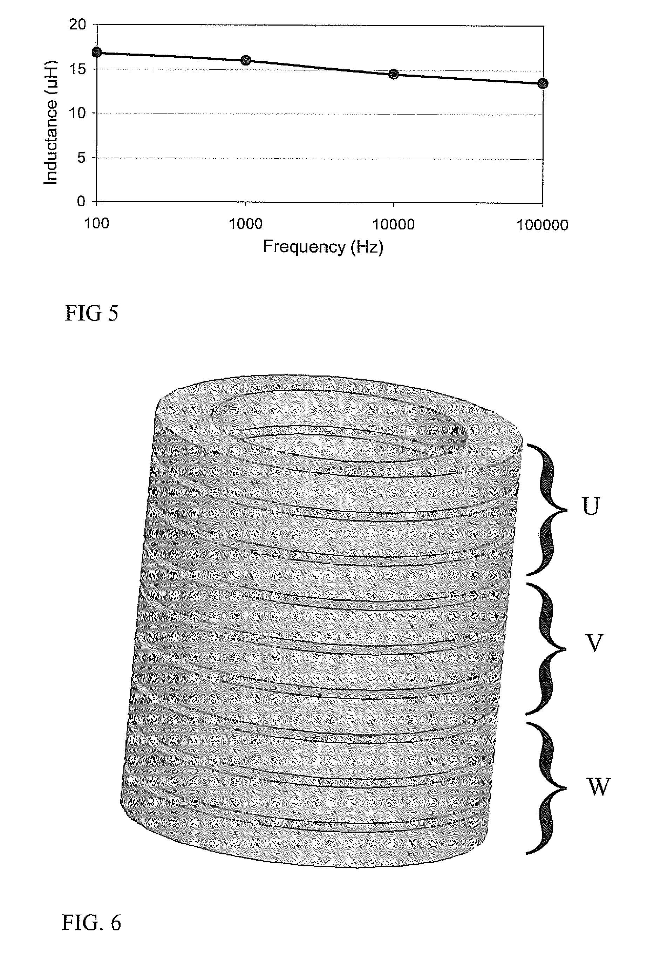

It has been found out by measurements and simulation that a surprisingly small inductance is needed to suppress common-mode currents. The inductance has to be present both for high operating frequencies and for high currents. A choke with an air core keeps its magnetic properties in high frequencies quite well, and Figure 5 shows inductance measured from choke with an air core as a function of frequency. As can be seen from Figure 5, the inductance is almost linear with respect to the frequency.

The invention is based on the idea of forming a filter such that the air cores or the windings of the chokes are arranged on the same axis. By arranging the separate coils on top of each other, the common-mode inductance originating from the separate chokes is maximized, and the common-mode current produces a common magnetic flux that passes through all the coils.

The volume required by the filter structure of the invention is considerably smaller than that of the known structures, and the power losses in the filter are also smaller than the power losses with correspondingly dimensioned prior-art solutions.

The structure of the present invention also allows omitting the nano crystal rings from the intermediate voltage circuit since the common-mode inductance is now produced at the output of the inverter with the filter. The whole filter structure is thus simplified when the rings are left out.

Since the chokes have air cores, the structure avoids the problem relating to the saturation of the magnetic materials in chokes. This further means that the inductance is almost linear with respect to the frequency. Thus, the structure of the present invention has better filtering properties than the prior art solutions. Also, the expenses relating to materials used in filters are reduced, since the nano crystal rings are avoided with the present invention.

It has also been noticed that the common-mode current is filtered more efficiently at the output of the inverter than in the intermediate voltage circuit.

### BRIEF DESCRIPTION OF THE DRAWINGS

In the following the invention will be described in greater detail by means of preferred embodiments with reference to the attached drawings, in which
Figure 1 shows a prior art structure of a frequency converter with a common-mode choke and output filter,
Figure 2 shows the connection of coils of output chokes to a power module having three parallel branches,
Figure 3 shows an inductance curve for nano crystal rings as a function of current and frequency,
Figure 4 shows a known output filter structure corresponding to the circuit of Figure 2,
Figure 5 is an inductance curve of an air core filter as a function of frequency,
Figures 6 and 7 are filter structures according to the present invention,
Figure 8 shows an embodiment of the filter structure of the invention, and
Figure 9 is a schematic circuit diagram showing an embodiment of the present invention.

### DETAILED DESCRIPTION OF THE INVENTION

Figure 6 shows a structure according to an embodiment of the present invention. According to the present invention, the filter structure comprises at least one choke per output phase of the inverter and each choke is an air core choke. In Figure 6 the filter is a three-phase U, V, W filter, where each phase consist of three parallel branches. This structure thus corresponds to the structure of Figure 4 and can be electrically connected as indicated in Figure 2.

Further according to the present invention, the air core chokes are arranged on the same axis such that the magnetic axis of each air core choke corresponds with each other. As seen from Figure 6, the chokes are in a pile such that the air cores of the chokes are aligned. With the magnetic axis of an air-core choke it is referred to an imaginary axis that is formed between the magnetic poles of a magnetized choke. When a current runs in the choke, a magnetic flux is formed and the magnetic poles are formed on the magnetic axis that passes through the choke approximately in the middle of the choke. Thus, the magnetic axis is a straight line passing through the choke approximately in the physical centre-point of the choke.

As mentioned above, Figure 6 shows an embodiment of a filter of the present invention that comprises three phases. Each of these phases U, V, W comprises three separate coils placed on top of each other. The windings of these coils or chokes belonging to the same phase are connected electrically together at their first ends and the second ends are connected to parallel-operated branches of an inverter when the structure is taken into use as in Figure 2. In the example of figure 6, the separate nine coils are shown. The coils are shown only as blocks without any specific number of winding turns. It is, however, clear that each coil may comprise multiple winding turns. It should also be noted that the winding ends that are used to make the electrical connections are not shown in the drawings.

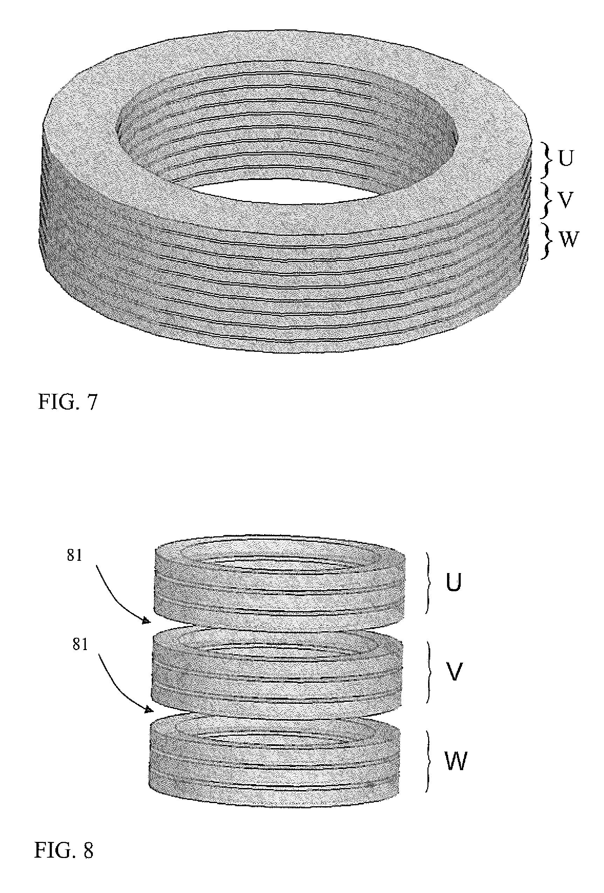

Figure 7 shows another embodiment of the invention. This embodiment also has nine separate coils (three phases and three coils per phase) but the geometry differs from that of Figure 6. The structure in Figure 7 is wider and shorter in the direction of the magnetic axis than the structure of Figure 6. The coils in Figures 6 and 7 are further placed on the same magnetic axis.

The inductive properties of the filter structure can be changed by changing the geometry of the coils. Referring back to Figures 6 and 7, Figure 6 shows a structure in which an attempt is made to maximise the differential-mode inductance and Figure 7 is a structure maximising the common-mode inductance. This is due to the fact that the inductance grows by shortening the winding and enlarging the diameter of the coil. With respect to differential-mode operation, the structure of Figure 6 is more optimal. If a same differential-mode inductance is required as with the known structure of Figure 5, the size of the separate coils is reduced. The smaller size also reduces the material costs. By optimising the inductance of the separate chokes, the common-mode inductance may be made higher, but with respect to the common-mode inductance, this optimised shape is not optimal.

If the common-mode inductance of the filter structure of the invention is to be maximised, the structure should be made as flat as possible and the diameter of the coil large. The flat structure refers to the height of the stack of the coils, i.e., to the dimension perpendicular to the diameter. A drawback relating to stacked structures is that during a three-phase operation, the differential-mode inductances have differing values. This is due to the different directions of currents which cause fluxes that partially cancel each other.

This drawback relating to the structure can be avoided by dimensioning the physical structure such that enough common-mode and differential-mode inductance are obtained. Another way of obtaining evenly distributed differential-mode inductances is shown in the example of Figure 8. In this embodiment of the invention, the coils of the different phases U, V, W are separated physically from each other, i.e., gaps 81 are formed between the coils in the direction of the magnetic axis. These gaps 81 provide separation for different phases and the magnetic interconnection gets looser, thereby reducing the variations in the differential-mode inductances. The common-mode inductance encountered by the common-mode current is also changed due to the gaps 81. However, the magnitude of the common-mode inductance obtained with the basic structure of stacked coils despite the gaps is large enough so that the problematic common-mode filters from the intermediate circuit can be omitted. The gaps 81 can be formed by using a non-magnetic support structure between the different groups to be separated, for example. It is to be noted that Figure 8 shows the chokes as toroids that do not include any coils. However, Figure 8 is used for illustrating the idea of providing gaps between groups of coils.

Certain differences also occur in inductances of coils belonging to the same phase due to the differing phase currents. These differences can be compensated by using coils that have a differing number of windings within one phase or by using different diameters for each coil.

The chokes used in the invention are made for example from copper which is form-wound and thus keeps its structure without any support. It is, however, understood that different coil materials can be used in the invention. It should also be understood that while the chokes are air-core chokes, any non-magnetic material may be used inside or around the chokes, since non-magnetic material is considered to correspond to air in connection with magnetic circuits. Such materials used inside or around the chokes may include plastics or similar for fastening and support purposes, for example.

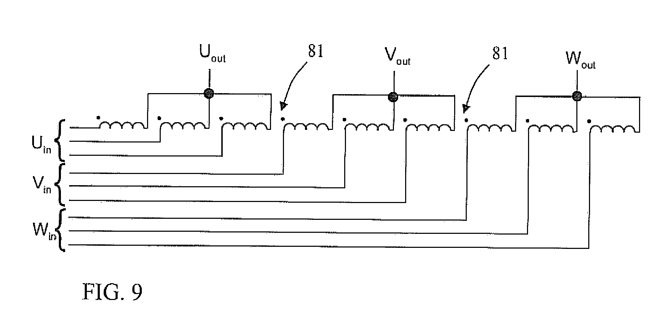

Figure 9 shows the electrical and magnetic connection of the chokes of the structure of the invention in connection with three phases and three parallel legs. The inputs of the chokes Uᵢₙ, Vᵢₙ, Wᵢₙ are intended to be connected to parallel branches of the inverter as in Figure 2. For example, input Uᵢₙ consist of three connection points that can be connected to three parallel branches that form together the phase output of an inverter. As seen from Figure 9, all the chokes are wound on the same direction, i.e., the polarity of the chokes correspond to each other. This means that the currents entering the chokes from the inverter produce fluxes that have same directions.

The chokes are magnetically coupled as seen from Figure 9. The magnetic interconnection between different phases is made weaker with the embodiment disclosed in Figure 8. In the circuit of Figure 9 this means that the choke groups are moved away from each other but still are on the same magnetic axis. Figure 9 also includes gaps 81 which are meant to illustrate the relationship between Figures 9 and 8.

Figures 6, 7 and 8 illustrate a structure where the filter is formed for inverters which have three output branches. The filter structure of the invention can, however, also be used in connection with inverters that have only one output per phase. In some situations, for example with long motor cablings, it is often required to use dU/dt filters, which are used for prolonging the rise time of the voltage step seen in the motor. Such dU/dt filters are usually constructed by using chokes connected to the output of the inverter, i.e., in series with the motor cables. The structure of the invention, where chokes share the same magnetic axis, provides a dU/dt function and also provides common-mode filtering with the same chokes without any additional structures.

As can be seen from Figures 6, 7 and 8, the individual chokes of the structure have a larger diameter than the height of the respective choke. Diameter refers to the measure across the choke and height refers to the dimension of the choke in the same direction as the magnetic axis. It should be noted that the chokes are not necessarily round but can also be rectangular with rounded corners. This dimensioning enables the chokes to be stacked and provides required inductances for the structure.

In the above, the filter structure of the invention has been described in detail with respect to an inverter output filter. It is, however, clear that the same structure can also be employed as a filter in a network converter.

It will be obvious to a person skilled in the art that the inventive concept can be implemented in various ways. The invention and its embodiments are not limited to the examples described above but may vary within the scope of the claims.

## Claims

1. A filter structure for an inverter or for a network converter, where the filter structure comprises at least one choke per phase (U, V, W) and each choke is an air-core choke, **characterized in that** the air-core chokes are arranged on the same axis such that the magnetic axis of each air-core choke corresponds to each other.

2. A structure according to claim 1, **characterized in that** the chokes in the structure are arranged in a stack enabling magnetic flux producible with any of the chokes in the structure to close at least partially via every choke in the structure.

3. A structure according to claim 1 or 2, **characterized in that** the filter structure comprises multiple chokes per phase, wherein the chokes of each phase are arranged on top of each other, each choke of the structure being arranged on the same axis.

4. A structure according to any of the previous claims, **characterized in that** the chokes of the structure have the same polarity and when connected to the output of an inverter, the current from the inverter is arranged to produce fluxes in the chokes, the produced fluxes having the same directions.

5. A structure according to any of the previous claims, **characterized in that** the air-core chokes of each phase are grouped together to form a choke group, and a gap (81) is formed between the choke groups.

6. A structure according to claim 5, **characterized in that** the choke group comprises at least one choke.

7. A structure according to claim 5 or 6, **characterized in that** the filter structure comprises multiple gaps (81) arranged between the choke groups.

8. A structure according to any of the previous claims, **characterized in that** the diameter of each choke is larger than the height of the choke.
